# EUROPÄISCHE PATENTSCHRIFT

(11) **EP 3 356 299 B1**
(45) Veröffentlichungstag und Bekanntmachung des Hinweises auf die Patenterteilung: **26.01.2022**
(21) Anmeldenummer: 16777557.6
(22) Anmeldetag: 20.09.2016
(51) Int. Cl.: C02F 9/00, C10L 9/08

(54) **SYSTEM ZUR AUFARBEITUNG VON ORGANISCHEN RESTSTOFFEN MITTELS HYDRTHERMALER KARBONISIERUNG**
SYSTEM FOR TREATING ORGANIC WASTE MATERIAL WITH HYDROTHERMAL CARBONATION
SYSTÈME POUR LE TRAITEMENT DES RÉSIDUES ORGANIQUES AVEC UN PROCÉDÉ DE CARBONISATION HYDROTHERMAL

(30) Priorität: 28.09.2015 DE 102015116366
(43) Veröffentlichungstag der Anmeldung: 08.08.2018
(73) Patentinhaber: GRENOL IP GmbH, 40882 Ratingen-Meiersberg (DE)
(72) Erfinder: ALFONS, Kuhles, 40882 Ratingen-Meiersberg (DE)
(74) Vertreter: Weisbrodt, Bernd
(86) Internationale Anmeldenummer: PCT/EP2016/072238
(87) Internationale Veröffentlichungsnummer: WO 2017/055131

(56) Entgegenhaltungen:
- DE-A1-102009 027 007
- DE-A1-102012 024 463
- DE-A1-102013 013 724
- DE-B3-102007 012 112
- DATABASE WPI Week 201402 Thomson Scientific, London, GB; AN 2013-V97454 XP002763665, & CN 103 318 918 A (WUHAN BAIFU ENVIRONMENTAL PROTECTION ENG) 25. September 2013 (2013-09-25)

## Beschreibung

Die vorliegende Erfindung betrifft ein System zur Aufbereitung von organischen Reststoffen und/oder Abfällen, insbesondere Biogasgärresten, Gülle und dergleichen, Gras- oder Grünschnitt und/oder Klärschlamm.

Es ist aus dem Stand der Technik bekannt, mittels des Verfahrens der hydrothermalen Karbonisierung aus Biomasse beziehungsweise organischen Reststoffen und/oder Abfällen auf einfache Weise Kohle oder Gas unter Freisetzung von Energie herzustellen. Dabei wird in einem Druckgefäß Biomasse zusammen mit Wasser erhitzt, wobei sowohl nasse als auch trockene Biomasse bei diesem Vorgang verarbeitet werden kann.

Innerhalb des mit der Biomasse gefüllten Druckgefäßes läuft eine exotherme Reaktion ab, bei welcher nach einigen Stunden der Kohlenstoff der Edukte vollständig umgesetzt wird, so dass auf diese Weise Braunkohle entsteht. Bei diesem physikochemischen Verfahren bleiben nahezu 100% des Kohlenstoffs und 2/3 der Energie, welche in der ursprünglichen Biomasse enthalten war, erhalten. Es erfolgt zudem keine Emission eines klimaschädlichen CO₂ oder Methan.

Als weiteres Produkt bei der hydrothermalen Karbonisierung entsteht ferner das sogenannte HTC-Prozesswasser, welches wertvolle Nährstoffe für das Pflanzenwachstum beinhaltet. Dieses Prozesswasser wird beispielsweise dazu eingesetzt, um in kurzer Zeit zusätzliche Biomasse in einer großen Menge zu erzeugen.

Als nachteilig ist gemäß dem Stand der Technik anzusehen, dass das vorliegende HTC-Prozesswasser unmittelbar für den Einsatz zur Beschleunigung eines Pflanzenwachstums eingesetzt wird und die Möglichkeiten zur vollständigen Nutzung des gesamten aus dem Prozess der HydroThermalen Karbonisierung resultierenden HTC-Prozesswassers aufgrund der notwendigen Anbauflächen für Pflanzen nicht wirtschaftlich erfolgen kann.

Ferner offenbart die DE 10 2013 013 724 A1 ein Verfahren zur Erzeugung eines homogenen Feststoffes aus Biomasse, indem die Biomasse einer hydrothermalen Karbonisierung unterzogen wird, mechanisch entwässert wird, ggf. thermisch getrocknet wird, das in der mechanischen Entwässerung vom Feststoff abgetrennte Filtrat durch Eindampfung in einen Rückstand und ein Kondensat zerlegt wird, Rückstand und/oder Kondensat anteilig in den Prozess zurückgeführt werden und überschüssiges Kondensat bevorzugt als Abwasser sowie überschüssiger Rückstand bevorzugt als Abfall oder Dünger aus dem Prozess ausgetragen werden.

Vor diesem Hintergrund liegt der vorliegenden Erfindung die Aufgabe zugrunde, ein verbessertes System zur Aufbereitung von organischen Reststoffen und/oder Abfällen bereitzustellen, bei welchem der Gesamtwirkungsgrad verbessert werden kann und zudem sämtliche im Prozess entstehenden Reaktionsprodukte weitestgehend genutzt werden.

Zur technischen Lösung dieser Aufgabe wird mit der vorliegenden Erfindung ein System zur Aufbereitung von organischen Reststoffen und/oder Abfällen, insbesondere Biogasgärresten, Gülle und dergleichen, Gras- oder Grünschnitt und/oder Klärschlamm gemäß Anspruch 1 vorgeschlagen.

Die Erfindung macht dabei insbesondere von der Erkenntnis Gebrauch, dass eine Reinigung des aus der hydrothermalen Karbonisierung resultierenden

Prozesswassers durch eine Aufkonzentrierung mittels Unterdruck durchgeführt werden kann und somit eine Wasserreinigung mittels Pflanzen, für welche hohe Platzerfordernisse bestehen, nicht zwangsläufig durchgeführt werden muss.

Zudem werden durch die erfindungsgemäße Lösung der objektiven technischen Aufgabe insbesondere Vorteile im Hinblick auf den Transport der Ausgangsstoffe der hydrothermalen Karbonisierung erzielt, da ein durch Aufkonzentrierung mittels Unterdruck aus dem Prozesswasser erhaltener Dünger deutlich besser transportierbar ist als das unverarbeitete Prozesswasser selbst.

In einer vorteilhaften Ausgestaltung der Erfindung ist vorgesehen, dass eine der Vorrichtung zur Trocknung und optionalen Brikettierung der als Ausgangsprodukt erhaltenen Kohle nachgeschaltete Vorrichtung, insbesondere ein Holz-/KohleVergaser, zur zumindest teilweisen Umwandlung der getrockneten und optional brikettierten Kohlen in ein Synthesegas vorgesehen ist. Der Einsatz einer derartigen Vorrichtung ist insbesondere dann denkbar, wenn als Ausgangsprodukt ein Synthesegas als Energieträger benötigt wird. Ferner ergeben sich auch Vorteile hinsichtlich der Handhabbarkeit sowie des Transports bei einem Synthesegas gegenüber Kohle.

In einer weiteren vorteilhaften Ausgestaltung der Erfindung ist vorgesehen, dass eine der Vorrichtung zur Umwandlung der getrockneten und optional brikettierten Kohle in ein Synthesegas nachgeschaltete Vorrichtung, insbesondere ein BiFuel-Motor, zur Nutzung des Synthesegases für die Erzeugung von Strom mittels eines Generators vorgesehen ist. Dies ermöglicht insbesondere eine bessere Verteilung der mittels der hydrothermalen Karbonisierung erfolgten Energie, da beispielsweise bereits vorhandene Infrastrukturen zum Transport von Strom genutzt werden können. Demnach kann das erfindungsgemäße System zur dezentralen Erzeugung von elektrischer und thermischer Energie eingesetzt werden.

Eine vorteilhafte Ausgestaltung der Erfindung sieht weiter vor, dass zwischen der Vorrichtung zur Trocknung und optionalen Brikettierung der als Ausgangsprodukt erhaltenen Kohle und vor der Vorrichtung zur Umwandlung der getrockneten und optionalen brikettierten Kohle in ein Synthesegas eine Vorrichtung zur Lagerung beziehungsweise Zwischenlagerung der Kohle vorgesehen ist. Dies ist dann vorteilhaft, wenn die Vorrichtung zur Umwandlung der getrockneten und optional brikettierten Kohle in ein Synthesegas nicht ausreichend dimensioniert ist, um eine unmittelbare Umwandlung der Kohle in ein Synthesegas durchzuführen sowie unterschiedliche Anforderungen an die Bereitstellung von elektrischer und thermischer Energie ausgleichen zu können. Vorzugsweise ist die Vorrichtung zur Lagerung beziehungsweise Zwischenlagerung der Kohle derart ausgebildet, dass diese eine Einrichtung zur automatischen Weiterbeförderung der Kohle von der Vorrichtung zur Trocknung und optionalen Brikettierung der als Ausgangsprodukt erhaltenen Kohle zur Vorrichtung zur Umwandlung der getrockneten optional brikettierten Kohle in ein Synthesegas mittels einer automatisierten Fördereinrichtung vorgesehen ist, so dass ein manueller Eingriff in das erfindungsgemäße System obsolet ist.

Gemäß einer anderen vorteilhaften Ausgestaltung der Erfindung ist vorgesehen, dass eine aus der Vorrichtung zur Trocknung und optionalen Brikettierung der als Ausgangsprodukt erhaltenen Kohle resultierende Abluft als Ansaugluft für die Vorrichtung zur Nutzung des Synthesegases vorgesehen ist. Dadurch wird die mitunter aus der Trocknung resultierende Emission von Schadstoffen vermieden, da beispielsweise verdunstende Phenole der Abluft im Motor der Vorrichtung zur Nutzung des Synthesegases als Brennstoff dienen können. Eine anderweitige Bereinigung der Abluft beziehungsweise der daraus resultierenden Emissionen ist demnach nicht notwendig.

In einer weiteren vorteilhaften Ausgestaltung der Erfindung ist eine im Rahmen der Vorrichtung zur Nutzung des Synthesegases erzeugte Abwärme als Wärmequelle für die Vorrichtung zur Vakuumdestillation und/oder für die Vorrichtung zur Umwandlung der organischen Reststoffe mittels der hydrothermalen Karbonisierung vorgesehen. Durch eine derartige Nutzung der ohnehin als Abwärme anfallenden Energie kann die Energiebilanz des gesamten erfindungsgemäßen Systems weiter erhöht werden. Eine mitunter separat einzurichtende Wärmequelle für die Vorrichtung zur Umwandlung der organischen Reststoffe mittels der hydrothermalen Karbonisierung und/oder der Vorrichtung zur zumindest teilweisen Vakuumdestillation des als Ausgangsprodukt erhaltenen Prozesswassers durch Aufkonzentrierung mittels Unterdruck ist demnach nicht notwendig. Besonders vorzugsweise ist die aus der Vorrichtung zur Nutzung des Synthesegases erzeugte Abwärme auch als Wärmequelle für die Vorrichtung zur Trocknung und optionalen Brikettierung der als Ausgangsprodukt erhaltenen Kohle vorgesehen.

In einer vorteilhaften Ausgestaltung des erfindungsgemäßen Systems ist für die Kohle, welche durch die Vorrichtung zur zumindest teilweisen Umwandlung der getrockneten und optional brikettierten Kohle in ein Synthesegas keine Verwendung findet, eine weitere Verwertung außerhalb des erfindungsgemäßen Systems vorgesehen. Eine derartige Verwertung kann im Rahmen der Kohleveredlung erfolgen, bei welcher beispielsweise eine Verkokung der Kohle oder eine Verflüssigung derselben durchgeführt wird.

In einer anderen vorteilhaften Ausgestaltung des erfindungsgemäßen Systems ist vorgesehen, dass für das Synthesegas, welches durch die Vorrichtung zur Nutzung des Synthesegases für die Erzeugung von Strom mittels eines Generators keine Verwendung findet, eine weitere Verwertung außerhalb des erfindungsgemäßen Systems erfolgt. Dies kann beispielsweise durch Abfüllen des nicht verwendeten Synthesegases in Gasflaschen bzw. Gaskartuschen erfolgen, welche für einen anschließenden Vertrieb geeignet sind.

Vorteilhafterweise ist in der Vorrichtung zur Umwandlung der organischen Reststoffe mittels hydrothermaler Karbonisierung eine Einrichtung zur Lösung chemisch gebundener Mineralien von den organischen Reststoffen und ein Verbleib dieser Mineralien im Prozesswasser vorgesehen. Dies ist insbesondere vorteilhaft, da auf diese Weise die mitunter in den organischen Reststoffen vorhandenen Mineralien nicht mit dem aus der hydrothermalen Karbonisierung resultierenden Produkt Kohle weiterverarbeitet werden, sondern sich stattdessen im Prozesswasser befinden, aus welchem durch die nachgeschaltete Vorrichtung zur zumindest teilweisen Vakuumdestillation des aus dem Ausgangsprodukt erhaltenen Prozesswassers durch Aufkonzentrierung mittels Unterdruck ein Dünger, insbesondere zur Nährstoffversorgung von Pflanzen, produziert werden kann.

Erfindungsgemäß ist vorgesehen, dass in der Vorrichtung zur Vakuumdestillation des als Ausgangsprodukt erhaltenen Prozesswassers eine Einrichtung zur Destillation von einem sich in dem Prozesswasser befindenden flüchtigen Ammonium und eine Einrichtung zur anschließenden Versetzung des destillierten Ammoniums mit einer günstigen Säure, insbesondere mit einer Schwefelsäure, zur Herstellung von einem als Dünger nutzbaren Ammoniumsulfat vorgesehen sind. Dadurch wird es insbesondere ermöglicht, Nitratanteile, welche sich in dem Prozesswasser befinden, aus diesem zu entfernen. Alle übrigen in dem Prozesswasser vorhandenen Mineralien bleiben je nach Aufkonzentration mit etwa 3 bis 5 Volumenprozent des Ausgangsmaterials als eine Art Grunddünger in der Lösung übrig, wobei es sich bei diesen Mineralien um die Makronährstoffe Phosphor, Kali, Kalk und Kohlenstoff, sowie die Mikronährstoffe Magnesium, Mangan, Bor und dergleichen handeln kann.

In einer weiteren vorteilhaften Ausgestaltung der Erfindung ist vorgesehen, dass in der Vorrichtung zur Vakuumdestillation des als Ausgangsprodukt erhaltenen Prozesswassers eine Einrichtung zur vollständigen Verdunstung des im Prozesswasser enthaltenen Wassers zur Herstellung eines streufähigen Düngers vorgesehen ist. Ein derartiges Vorgehen ist dann vorteilhaft, wenn das Vorliegen eines streufähigen Düngers, beispielsweise zu Transportzwecken, präferiert wird und für das destillierte Wasser keine lokale Verwendung vorliegt.

In einer vorteilhaften Ausgestaltung des erfindungsgemäßen Systems ist ferner vorgesehen, dass eine von extern zugeführte Abwärme, insbesondere von einer Biogasanlage ohne Wärmekonzept, als optionale Wärmequelle für die Vorrichtung zur Vakuumdestillation und/oder für die Vorrichtung zur Umwandlung der organischen Reststoffe mittels hydrothermaler Karbonisierung vorgesehen ist. Dadurch wird es ermöglicht, zum einen mitunter auftretende negative Energiebilanzen hinsichtlich der Wärmeversorgung des eigenen Systems zu kompensieren und zum anderen die in anderen Biogasanlagen ohne Wärmekonzept entstandene Abwärme sinnvoll zu verwenden.

Eine andere vorteilhafte Ausgestaltung der Erfindung sieht weiter vor, dass für das Prozesswasser, welches durch die Vorrichtung zur zumindest teilweisen Vakuumdestillation keine Verwendung findet, eine Verwertung mittels aquatischer Pflanzen in einem vorzugsweise automatisch zu beerntenden Gewächshaus vorgesehen ist. Dies ist insbesondere dann sinnvoll, wenn für die Produktion von Dünger kein weiteres Prozesswasser benötigt wird, und dennoch das Prozesswasser beziehungsweise die in dem Prozesswasser vorhandenen Nährstoffe energetisch sinnvoll eingesetzt werden sollen. Durch die Verwertung des Prozesswassers mittels aquatischer Pflanzen wird eine Wasserreinigung durchgeführt, wobei die aquatischen möglichst C₄-Pflanzen sich zu diesem Zweck besonders gut eignen und durch deren Wachstum eine zusätzliche Biomasse generiert wird, welche einerseits CO₂ aus der Luft holt und somit als CO₂-Senke fungieren kann sowie andererseits als Eingangsstoff für das erfindungsgemäße System verwendet werden kann und damit wieder Energie generiert.

Weitere Einzelheiten, Merkmale und Vorteile der Erfindung werden nachfolgend anhand des in der Figur dargestellten Ausführungsbeispiels näher erläutert.

Dabei zeigt:

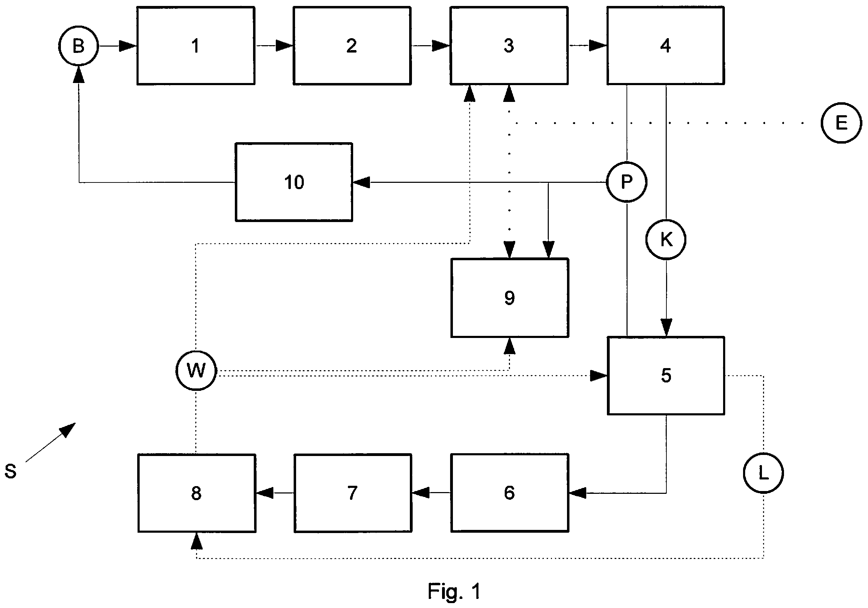

- Fig. 1: ein erfindungsgemäßes System zur Aufbereitung von organischen Reststoffen und/oder Abfällen in einem Blockschaltbild.

Fig. 1 zeigt in einem schematischen Blockschaltbild ein erfindungsgemäßes System 5 zur Aufbereitung von organischen Reststoffen und/Abfällen. Dieses System 5 umfasst eine Vorrichtung 1 zur Beseitigung von Störstoffen aus den organischen Reststoffen, welcher eine Biomasse B in Form organischer Reststoffe und/oder Abfälle zugeführt wird. Nach erfolgter Störstoffbeseitigung wird die Biomasse B in einer Vorrichtung 2 zur Zerkleinerung der organischen Reststoffe weiterverarbeitet. Die Zerkleinerung der organischen Reststoffe dient insbesondere einem beschleunigten weiteren Prozessverlauf. Nachdem die organischen Reststoffe zerkleinert wurden erfolgt in der Vorrichtung 3 zur Umwandlung der organischen Reststoffe mittels hydrothermaler Karbonisierung eine Transformation der Biomasse B in die Ausgangsprodukte Kohle K und Prozesswasser P. Diese beiden Ausgangsprodukte liegen zu diesem Zeitpunkt im System 5 als eine Art wässriger Schlamm vor, so dass es einer Trennung dieser beiden Ausgangsstoffe bedarf. Eine derartige Trennung erfolgt in der sich an die Vorrichtung 3 zur Umwandlung der organischen Reststoffe mittels hydrothermaler Karbonisierung anschließenden Vorrichtung 4, welche zur Separation der aus der hydrothermalen Karbonisierung resultierenden Ausgangsprodukte Kohle K und Prozesswasser P vorgesehen ist. Vorliegend ist eine derartige Vorrichtung 4 insbesondere als eine Kammerpresse oder eine Zentrifuge ausgebildet, welche sich zur Separation besonders eignen.

Für die nun als Ausgangsprodukt vorliegende Kohle ist zur weiteren Verarbeitung systemseitig eine Vorrichtung 5 zur Trocknung und optionalen Brikettierung vorgesehen. Dabei ist ein aus dieser Trocknung resultierendes Prozesswasser P dem bereits existierenden Prozesswasser P zuführbar, welches als Ausgangsprodukt der hydrothermalen Karbonisierung vorliegt und mittels der vorgeschalteten Vorrichtung 4 zur Separation der aus der hydrothermalen Karbonisierung resultierenden Ausgangsprodukte getrennt wurde. Anschließend erfolgt eine Weiterverarbeitung der nunmehr getrockneten Kohle K mittels einer Vorrichtung 7 zur zumindest teilweisen Umwandlung der getrockneten und optionale brikettierten Kohle K in ein Synthesegas, wobei optional eine Lagerung beziehungsweise Zwischenlagerung der Kohle K mittels einer entsprechenden Vorrichtung 6 erfolgen kann. Eine derartige Vorrichtung 6 zur Lagerung beziehungsweise Zwischenlagerung der Kohle K ist insbesondere dann sinnvoll falls nur ein bestimmter Teil der Kohle weiterverarbeitet werden soll und ein anderer Teil mitunter in unveränderter Form verkauft wird. Die der Vorrichtung 7 zur zumindest teilweisen Umwandlung der getrockneten und optional brikettierten Kohle K in ein Synthesegas nachgeschaltete Vorrichtung 8 zur Nutzung des Synthesegases für die Erzeugung von Strom mittels eines Generators ist im erfindungsgemäßen System 5 vorgesehen, da hiermit Strom als Energieträger produziert werden kann, sofern das Vorliegen von Kohle K und/oder Gas als Energieträger nicht gewünscht ist. Die im Rahmen der Vorrichtung 5 zur Trocknung und optionalen Brikettierung der als Ausgangsprodukt erhaltenen Kohle K entstehende Abluft ist vorliegend als Ansaugluft für die Vorrichtung 8 zur Nutzung des Synthesegases vorgesehen, da in der Abluft vorhandene Emissionen wie beispielsweise Phenole im Motor als Brennstoff dienen.

Das systemseitig vorliegende Prozesswasser P wird mittels einer Vorrichtung 9 zur zumindest teilweisen Vakuumdestillation des als Ausgangsprodukt erhaltenen Prozesswassers durch Aufkonzentrierung mittels Unterdruck zur Produktion von Dünger verwendet. Dazu weist die Vorrichtung 9 zur Vakuumdestillation des als Ausgangsprodukt erhaltenen Prozesswassers P insbesondere eine Einrichtung zur Destillation von einem sich in dem Prozesswasser P befindenden flüchtigen Ammonium und einer Einrichtung zur anschließenden Versetzung des destillierten Ammoniums mit einer günstigen Säure, insbesondere mit einer Schwefelsäure zur Herstellung von einem als Dünger nutzbaren Ammoniumsulfat auf. Im vorliegenden Ausführungsbeispiel ist zur Verwertung des Prozesswassers P zusätzlich vorgesehen, dass das nicht für die Produktion von Dünger verwendete Prozesswasser P in einer Vorrichtung 10 zur Verwertung mittels aquatischer Pflanzen vorgesehen ist. Aquatische Pflanzen sind dazu geeignet, die in dem Prozesswasser P befindlichen Nährstoffe beziehungsweise Mineralien besonders gut zu verarbeiten und eignen sich überdies hinaus als Biomasse B, welche dem erfindungsgemäßen System 5 als Eingangsstoff hinzugefügt werden kann.

Zur weiteren Steigerung der Energiebilanz des erfindungsgemäßen Systems 5 wird im vorliegenden Ausführungsbeispiel die aus der Vorrichtung 8 zur Nutzung des Synthesegases für die Erzeugung von Strom mittels eines Generators resultierende Abwärme W dazu genutzt, die Vorrichtung 5 zur Trocknung und optionalen Brikettierung der als Ausgangsprodukt erhaltenen Kohle K, die Vorrichtung 9 zur zumindest teilweisen Vakuumdestillation des als Ausgangsprodukt erhaltenen Prozesswassers P durch Aufkonzentrierung mittels Unterdruck als auch die Vorrichtung 3 zur Umwandlung der organischen Reststoffe mittels hydrothermaler Karbonisierung zu versorgen.

Zusätzlich ist bei dem erfindungsgemäßen System 5 gemäß vorliegendem Ausführungsbeispiel vorgesehen, dass eine von extern zugeführte Abwärme E, welche insbesondere von einer Biogasanlage ohne Wärmekonzept zugeführt wird, als optionale Wärmequelle für die Vorrichtung 3 zur Umwandlung der organischen Reststoffe mittels hydrothermaler Karbonisierung und/oder für die Vorrichtung 9 zur Vakuumdestillation eingesetzt wird. Auf diese Weise kann ein mitunter auftretendes Defizit an vorliegender Abwärme im erfindungsgemäßen System 5 ausgeglichen werden und zudem die überschüssige Abwärme E einer Biogasanlage ohne Wärmekonzept sinnvoll verwendet werden.

Die in der Figur dargestellten Ausführungsbeispiele und die im Zusammenhang mit diesen erläuterten Ausführungsbeispiele dienen lediglich einer Erläuterung der Erfindung und sind für diese nicht beschränkend.

### Bezuaszeichenliste:

- 1: Vorrichtung zur Beseitigung von Störstoffen aus den organischen Reststoffen (B)
- 2: Vorrichtung zur Zerkleinerung der organische Reststoffe (B)
- 3: Vorrichtung zur Umwandlung der organischen Reststoffe (B) mittels hydrothermaler Karbonisierung
- 4: Vorrichtung zur Separation der aus der hydrothermalen Karbonisierung resultierenden Ausgangsprodukte Kohle (K) und Prozesswasser (P)
- 5: Vorrichtung zur Trocknung und optionalen Brikettierung der als Ausgangsprodukt erhaltenen Kohle (K)
- 6: Vorrichtung zur Lagerung bzw. Zwischenlagerung der Kohle
- 7: Vorrichtung zur zumindest teilweisen Umwandlung der getrockneten und optional brikettierten Kohle (K) in ein Synthesegas
- 8: Vorrichtung zur Nutzung des Synthesegases für die Erzeugung von Strom mittels eines Generators
- 9: Vorrichtung zur zumindest teilweisen Vakuumdestillation des als Ausgangsprodukt erhaltenen Prozesswassers (P) durch Aufkonzentrierung mittels Unterdruck
- 10: Vorrichtung zur zumindest teilweisen Verwertung des Prozesswassers (P) mittels aquatischer Pflanzen
- B: Biomasse in Form organischer Reststoffe und/oder Abfälle
- E: von extern zugeführte Abwärme
- K: Kohle
- L: aus der Vorrichtung (5) zur Trocknung und optionalen Brikettierung der als Ausgangsprodukt erhaltenen Kohle (K) resultierende Abluft
- P: Prozesswasser
- S: System zur Aufbereitung von organischen Reststoffen und/oder Abfällen (B)
- W: im Rahmen der Vorrichtung zur Nutzung des Synthesegases (8) erzeugte Abwärme

## Patentansprüche

1. System (S) zur Aufbereitung von organischen Reststoffen und/oder Abfällen (B), insbesondere Biogasgärresten, Gülle und dergleichen, Grasoder Grünschnitt und/oder Klärschlamm, umfassend
- eine Vorrichtung (1) zur Beseitigung von Störstoffen aus den organischen Reststoffen (B),
- eine der Vorrichtung (1) zur Beseitigung von Störstoffen optional nachgeschaltete Vorrichtung (2) zur Zerkleinerung der organische Reststoffe (B),
- eine der Vorrichtung (1) zur Beseitigung von Störstoffen und/oder der Vorrichtung (2) zur Zerkleinerung der organische Reststoffe (B) nachgeschaltete Vorrichtung (3) zur Umwandlung der organischen Reststoffe (B) in die Ausgangsprodukte Kohle (K) und Prozesswasser (P) mittels hydrothermaler Karbonisierung,
- eine der Vorrichtung (3) zur Umwandlung der organischen Reststoffe (B) mittels hydrothermaler Karbonisierung nachgeschaltete Vorrichtung (4), insbesondere eine Kammerfilterpresse oder Zentrifuge, zur Separation der aus der hydrothermalen Karbonisierung resultierenden Ausgangsprodukte Kohle (K) und Prozesswasser (P),
- eine der Vorrichtung (4) zur Separation der aus der hydrothermalen Karbonisierung resultierenden Ausgangsprodukte nachgeschaltete Vorrichtung (5) zur Trocknung der als Ausgangsprodukt erhaltenen Kohle (K), wobei ein aus dieser Trocknung resultierendes Prozesswasser (P) dem aus der hydrothermalen Karbonisierung resultierenden Prozesswasser (P) zuführbar ist, und
- eine der Vorrichtung (4) zur Separation der aus der hydrothermalen Karbonisierung resultierenden Ausgangsprodukte nachgeschaltete Vorrichtung (9) zur zumindest teilweisen Vakuumdestillation des als Ausgangsprodukt erhaltenen Prozesswassers (P) durch Aufkonzentrierung mittels Unterdruck zur Produktion von Dünger, in welcher
- eine Einrichtung zur Destillation von einem sich in dem Prozesswasser (P) befindenden flüchtigen Ammonium, und
- eine Einrichtung zur anschließenden Versetzung des destillierten Ammoniums mit einer Schwefelsäure zur Herstellung von einem als Dünger nutzbaren Ammoniumsulfat
vorgesehen sind.

2. System (S) nach Anspruch 1, **dadurch gekennzeichnet, dass** eine der Vorrichtung (5) zur Trocknung der als Ausgangsprodukt erhaltenen Kohle (K) nachgeschaltete Vorrichtung (7), insbesondere ein Holz-/KohleVergaser, zur zumindest teilweisen Umwandlung der getrockneten Kohle (K) in ein Synthesegas vorgesehen ist.

3. System (S) nach Anspruch 2, **dadurch gekennzeichnet, dass** eine der Vorrichtung (7) zur Umwandlung der getrockneten Kohle (K) in ein Synthesegas nachgeschaltete Vorrichtung (8), insbesondere ein BiFuel-Motor, zur Nutzung des Synthesegases für die Erzeugung von Strom mittels eines Generators vorgesehen ist.

4. System (S) nach Anspruch 3, **dadurch gekennzeichnet, dass** zwischen der Vorrichtung (5) zur Trocknung der als Ausgangsprodukt erhaltenen Kohle (K) und vor der Vorrichtung (7) zur Umwandlung der getrockneten Kohle (K) in ein Synthesegas eine Vorrichtung (6) zur Lagerung bzw. Zwischenlagerung der Kohle (K) vorgesehen ist.

5. System (S) nach Anspruch 3 oder Anspruch 4, **dadurch gekennzeichnet, dass** eine aus der Vorrichtung (5) zur Trocknung der als Ausgangsprodukt erhaltenen Kohle (K) resultierende Abluft (L) als Ansaugluft für die Vorrichtung (8) zur Nutzung des Synthesegases vorgesehen ist.

6. System (S) nach einem der Ansprüche 3 bis 5, **dadurch gekennzeichnet, dass** eine im Rahmen der Vorrichtung (8) zur Nutzung des Synthesegases erzeugte Abwärme (W) als Wärmequelle für die Vorrichtung (9) zur Vakuumdestillation und/oder für die Vorrichtung (3) zur Umwandlung der organischen Reststoffe (B) mittels der hydrothermalen Karbonisierung vorgesehen ist.

7. System (S) nach einem der Ansprüche 3 bis 6, **dadurch gekennzeichnet, dass** für die Kohle (K), welche durch die Vorrichtung (7) zur zumindest teilweisen Umwandlung der getrockneten Kohle (K) in ein Synthesegas keine Verwendung findet, eine weitere Verwertung außerhalb des erfindungsgemäßen Systems vorgesehen ist.

8. System (S) nach einem der Ansprüche 3 bis 7, **dadurch gekennzeichnet, dass** für das Synthesegas, welches durch die Vorrichtung (8) zur Nutzung des Synthesegases für die Erzeugung von Strom mittels eines Generators keine Verwendung findet, eine weitere Verwertung außerhalb des erfindungsgemäßen Systems vorgesehen ist.

9. System (S) nach einem der Ansprüche 1 bis 8, **dadurch gekennzeichnet, dass** in der Vorrichtung (3) zur Umwandlung der organischen Reststoffe (B) mittels hydrothermaler Karbonisierung eine Einrichtung zur Lösung chemisch gebundener Mineralien von den organischen Reststoffen (B) und ein Verbleib dieser Mineralien im Prozesswasser (P) vorgesehen ist.

10. System (S) nach einem der Ansprüche 1 bis 9, **dadurch gekennzeichnet, dass** in der Vorrichtung (9) zur Vakuumdestillation des als Ausgangsprodukt erhaltenen Prozesswassers (P) eine Einrichtung zur vollständigen Verdunstung des im Prozesswasser (P) enthaltenen Wassers zur Herstellung eines streufähigen Düngers vorgesehen ist.

11. System (S) nach einem der Ansprüche 1 bis 10, **dadurch gekennzeichnet, dass** eine von extern zugeführte Abwärme (E), insbesondere von einer Biosgasanlage ohne Wärmekonzept, als Wärmequelle für die Vorrichtung (9) zur Vakuumdestillation und/oder für die Vorrichtung (3) zur Umwandlung der organischen Reststoffe (B) mittels hydrothermaler Karbonisierung vorgesehen ist.

12. System (S) nach einem der Ansprüche 1 bis 11, **dadurch gekennzeichnet, dass** für das Prozesswasser (P), welches durch die Vorrichtung (9) zur zumindest teilweisen Vakuumdestillation keine Verwendung findet, eine Verwertung in einer Vorrichtung (10) mittels aquatischer Pflanzen vorgesehen ist.

## Claims

1. System (S) for the treatment of organic waste and/or waste (B), particularly waste from biogas plants, slurry and the like, cut or green waste and/or sewage sludge, comprising
- a device (1) for removal of impurities from the organic waste (B),
- a device (2) for crushing the organic waste material (B) which is arranged downstream the device (1) for removal of impurities,
- a device (3) for conversion of the organic waste (B) into the processed products coal (K) and process water (P) using hydrothermal carbonization which is arranged downstream the device (1) for removal of impurities and/or the device (2) for crushing the organic waste material (B),
- a device (4) for separation of the processed products coal (K) and process water (P) resulting from the hydrothermal carbonization, particularly a chamber filter press or a centrifuge, which is arranged downstream the device (3) for conversion of the organic waste (B) into the processed products coal (K) and process water (P) using hydrothermal carbonization,
- a device (5) for drying the coal (K) obtained as a processed product, which is arranged downstream the device (4) for separation of the processed products coal (K) and process water (P) resulting from the hydrothermal carbonization, wherein a process water (P) resulting from the drying of the coal (K) is conveyed to the process water (P) obtained by the hydrothermal carbonization, and
- a device (9) for an at least partial vacuum distillation of the process water (P) obtained as a processed product by concentrating using negative pressure for the production of fertilizer which is arranged downstream the device (4) for separation of the processed products resulting from the hydrothermal carbonization, comprising
- an apparatus for a distillation of a volatile ammonium contained in the process water (P) and
- an apparatus for the subsequent mixing of the distilled ammonium with a sulphuric acid for the production of an ammonium sulphate usable as fertilizer.

2. System (S) according to claim 1, **characterized by** a device (7) for an at least partial conversion of the dried coal (K) into a synthetic gas, particularly a wood-/coal-gasifier, which is arranged downstream the device (5) for drying the coal (K).

3. System (S) according to claim 2, **characterized by** a device (8) for utilization of the synthetic gas for the production of electrical energy using a generator, particularly a bi-fuel engine, which is arranged downstream the device (7) for a conversion of the dried coal (K) into a synthetic gas.

4. System (S) according to claim 3, **characterized by** a device (6) for storage respectively interim storage of the coal (K) which is arranged between the device (5) for drying the coal (K) and the device (7) for a conversion of the dried coal (K) into a synthetic gas.

5. System (S) according to claim 3 or claim 4, **characterized in that** an exhaust air (L) resulting from the device (5) for the drying the coal (K) is used as inlet air for the device (8) for utilization of the synthetic gas for the production of electrical energy using a generator.

6. System (S) according to one of the claims 3 to 5, **characterized in that** a waste heat (W) which is produced by the device (8) for utilization of the synthetic gas for the production of electrical energy using a generator is used as a heat source for the device (9) for a vacuum distillation and/or for the device (3) for conversion of the organic waste (B) using hydrothermal carbonization.

7. System (S) according to one of the claims 3 to 6, **characterized in that** the coal (K), which is not used by the device (7) for an at least partial conversion of the dried coal (K) into a synthetic gas, is provided for further usage outside of the inventive system.

8. System (S) according to one of the claims 3 to 7, **characterized in that** the synthetic gas, which is not used by the device (8) for utilization of the synthetic gas for the production of electrical energy using a generator, is provided for further usage outside of the inventive system.

9. System (S) according to one of the claims 1 to 8, **characterized in that** the device (3) for conversion of the organic waste (B) into the processed products coal (K) and process water (P) using hydrothermal carbonization comprises an apparatus for dispensing chemically bound minerals from the organic waste (B) and keeping these minerals within the process water (P).

10. System (S) according to one of the claims 1 to 9, **characterized in that** the device (9) for a vacuum distillation of the process water (P) obtained as a processed product comprises an apparatus for complete vaporization of the water contained in the process water (P) for the production of a spreadable fertilizer.

11. System (S) according to one of the claims 1 to 10, **characterized in that** a waste heat (E) introduced from an external source, particularly from a biogas plant without a heat concept, is used as a heat source for the device (9) for a vacuum distillation and/or the device (3) for conversion of the organic waste (B) into the processed products coal (K) and process water (P) using hydrothermal carbonization.

12. System (S) according to one of the claims 1 to 11, **characterized in that** the process water (P), which is not used by the device (9) for an at least partial vacuum distillation, is utilized by a device (10) using aquatic plants.

## Revendications

1. Système (S) de retraitement de matières résiduelles organiques et/ou de déchets (B), en particulier de résidus de fermentation sous forme de biogaz, de fumier et analogues, d'herbe coupée ou de végétaux coupés et/ou de boue d'épuration, comprenant
- un dispositif (1) pour éliminer des impuretés à partir de matières résiduelles organiques (B),
- un dispositif (2) de broyage de matières résiduelles organiques (B), facultativement monté en aval du dispositif (1) pour éliminer des impuretés,
- un dispositif (3) de conversion des matières résiduelles organiques (B) en charbon de matière première (K) et eau de traitement (P) par carbonisation hydrothermique, monté en aval du dispositif (1) pour éliminer des impuretés et/ou du dispositif (2) de broyage de matières résiduelles organiques (B),
- un dispositif (4) monté en aval du dispositif (3) de conversion des matières résiduelles organiques (B) par carbonisation hydrothermique, en particulier un filtre-presse à chambres ou une centrifugeuse, pour une séparation du charbon de matière première (K) et de l'eau de traitement (P) résultant de la carbonisation hydrothermique,
- un dispositif (5) en aval du dispositif (4) pour une séparation des matières premières résultant de la carbonisation hydrothermique, pour sécher le charbon (K) obtenu comme matière première, dans lequel une eau de traitement (P) résultant de ce séchage peut être fournie à l'eau de traitement (P) résultant de la carbonisation hydrothermique, et
- un dispositif (9) en aval du dispositif (4) pour une séparation des matières premières résultant de la carbonisation hydrothermique pour une distillation au moins partielle sous vide de l'eau de traitement (P) obtenue comme matière première par concentration au moyen d'une pression négative pour la production d'engrais, dans lequel
- un appareil de distillation d'un ammonium volatil contenu dans l'eau de traitement (P), et
- un appareil pour un ajout ultérieur d'un acide sulfurique à l'ammonium distillé afin de produire un sulfate d'ammonium pouvant être utilisé comme engrais
est prévu.

2. Système (S) selon la revendication 1, **caractérisé en ce qu'**un dispositif (7), en particulier un gazéificateur bois/charbon, est prévu en aval du dispositif (5) pour sécher le charbon (K) obtenu comme matière première, pour une conversion au moins partielle du charbon séché (K) en un gaz de synthèse.

3. Système (S) selon la revendication 2, **caractérisé en ce qu'**un dispositif (8), en particulier un moteur bicarburant, est prévu en aval du dispositif (7) pour une conversion du charbon séché (K) en un gaz de synthèse, pour une utilisation du gaz de synthèse pour la production d'électricité au moyen d'un générateur.

4. Système (S) selon la revendication 3, **caractérisé en ce qu'**un dispositif (6) pour stocker ou stocker temporairement le charbon (K) est prévu entre le dispositif (5) pour sécher le charbon (K) obtenu comme matière première et en amont du dispositif (7) pour convertir le charbon séché (K) en un gaz de synthèse.

5. Système (S) selon la revendication 3 ou la revendication 4, **caractérisé en ce qu'**un air d'échappement (L) résultant du dispositif (5) pour sécher le charbon (K) obtenu comme matière première est prévu comme air d'admission pour le dispositif (8) pour une utilisation du gaz de synthèse.

6. Système (S) selon l'une quelconque des revendications 3 à 5, **caractérisé en ce qu'**est prévue comme source de chaleur, pour le dispositif (9) pour une distillation sous vide et/ou pour le dispositif (3) pour une conversion des matières résiduelles organiques (B) par carbonisation hydrothermique, une chaleur perdue (W) produite dans le cadre du dispositif (8) pour une utilisation du gaz de synthèse.

7. Système (S) selon l'une quelconque des revendications 3 à 6, **caractérisé en ce qu'**une autre utilisation est prévue, en dehors du système selon l'invention, pour le charbon (K) qui n'est pas utilisé par le dispositif (7) pour une conversion au moins partielle du charbon séché (K) en un gaz de synthèse.

8. Système (S) selon l'une quelconque des revendications 3 à 7, **caractérisé en ce qu'**une autre utilisation est prévue, en dehors du système selon l'invention, pour le gaz de synthèse qui n'est pas utilisé par le dispositif (8) pour une utilisation du gaz de synthèse pour la production d'électricité au moyen d'un générateur.

9. Système (S) selon l'une quelconque des revendications 1 à 8, **caractérisé en ce qu'**est prévu, dans le dispositif (3) pour une conversion des matières résiduelles organiques (B) par carbonisation hydrothermique, un appareil pour une dissolution de minéraux liés chimiquement à partir des matières résiduelles organiques (B) et une rétention de ces minéraux dans l'eau de traitement (P).

10. Système (S) selon l'une quelconque des revendications 1 à 9, **caractérisé en ce qu'**un appareil pour une évaporation complète de l'eau contenue dans l'eau de traitement (P) est prévu dans le dispositif (9) pour une distillation sous vide de l'eau de traitement (P) obtenue comme matière première, pour une production d'un engrais à répandre.

11. Système (S) selon l'une des revendications 1 à 10, **caractérisé en ce qu'**est prévue, comme source de chaleur pour le dispositif (9) de distillation sous vide et/ou pour le dispositif (3) de conversion des matières résiduelles organiques (B) par carbonisation hydrothermique, une chaleur perdue (E) amenée de l'extérieur, en particulier d'une installation de biogaz sans concept thermique.

12. Système (S) selon l'une quelconque des revendications 1 à 11, **caractérisé en ce que** pour l'eau de traitement (P) qui n'est pas utilisée par le dispositif (9) pour une distillation sous vide au moins partielle, une utilisation est prévue dans un dispositif (10) au moyen de plantes aquatiques.
